# EUROPEAN PATENT APPLICATION

(11) **EP 1 324 413 A1**
(43) Date of publication of application: **02.07.2003**
(21) Application number: 02256850.5
(22) Date of filing: 02.10.2002
(51) Int. Cl.: H01M 8/04

(54) **Fuel celll electric power generator**

(30) Priority: 02.10.2001 JP 2001306385; 04.02.2002 JP 2002027260
(71) Applicant: NGK INSULATORS, LTD., Nagoya-City, Aichi Prefecture 467-8530 (JP)
(72) Inventor: Takeuchi, Yukihisa, c/o Intellectual Property Dept, Nagoya-shi, Aichi-ken, 467-8530 (JP); Hirota, Toshikazu, c/o Intellectual Property Dept., Nagoya-shi, Aichi-ken, 467-8530 (JP)
(74) Representative: Paget, Hugh Charles Edward

(57) **Abstract**

A fuel droplet exists in a state in which the size of the droplet for supplying a raw fuel is sufficiently small and its dispersion is restrained. The supply of the raw fuel can be realized by free design irrespective of the amount of a gas as a moving medium of the fuel droplet and a moving state. Further, the taking-out of hydrogen can be efficiently realized with good responsibility, and an efficient fuel cell having excellent load changing characteristics is provided.

In a reformer connected to the fuel cell, a raw fuel supply section connected to a tank for storing the raw fuel mixing methanol and water is attached to an inlet hole of a can body. The raw fuel sprayed by its own strength as a micro pump from the raw fuel supply section reaches an outlet hole via a catalyst body and a CO reducing section in a process passing an evaporating section. The obtained fluid of rich hydrogen is conveyed to a fuel cell main body arranged on the downstream side of the reformer.

## Description

### BACKGROUND OF THE INVENTION

### FIELD OF THE INVENTION

The present invention relates to a fuel cell power generator. More particularly, it relates to a fuel cell power generator which has a raw fuel storing section for storing a liquid raw material or a liquid fuel (hereinafter called a raw fuel) of a liquid hydrocarbon such as gasoline, etc., an alcohol, a mixed liquid of the liquid hydrocarbon such as gasoline, etc. or an alcohol with water, or an organic hydrides such as cyclohexane, decalin, etc., and also has a fuel cell main body for generating electric power by hydrogen generated from the raw fuel.

The present invention also relates to a fuel cell power generator which has a raw fuel storing section for storing a raw fuel of a liquid hydrocarbon such as gasoline, etc., an alcohol, or a mixed liquid of a liquid hydrocarbon such as gasoline, etc. with water or alcohol with water, an evaporating section for evaporating the raw fuel, a reforming section for processing reforming reaction of the evaporated raw fuel constructed by a steam reforming reaction, a partial oxidation reforming reaction, or a reforming reaction using both the steam reforming reaction and the partial oxidation reforming reaction to make reformed gas. and a fuel cell main body for generating electric power by the reformed gas.

The present invention also relates to a fuel cell power generator which has a raw fuel storing section for storing a raw fuel of a liquid hydrocarbon such as gasoline, etc., alcohol, or a mixed liquid of liquid hydrocarbon such as gasoline, etc. with water, or alcohol with water, a reforming section for processing reforming reaction of the raw fuel constructed by a steam reforming reaction, a partial oxidation reforming reaction, or a reforming reaction using both the steam reforming reaction and the partial oxidation reforming reaction to make reformed gas, and a fuel cell main body for generating electric power by the reformed gas.

Further, the present invention relates to a fuel cell power generator having a raw fuel storing section for storing an organic hydrides such as cyclohexane, decalin, etc., a hydrogen converting section for converting the raw fuel to hydrogen gas by processing hydrogen generating reaction of the raw fuel, and a fuel cell main body for generating electric power by the hydrogen gas. The hydrogen generating reaction processing is constructed by a dehydrogenation reaction.

### DESCRIPTION OF THE RELATED ART

In recent years, an environmental technologies in the power plants draws attention and concern with respect to the fuel cell is raised. The fuel cell has advantages of high electric power generating efficiency and low amount of carbon dioxide. Also, the fuel cell restrains the generation of a harmful gas such as carbon monoxide, nitrogen oxides, etc. Accordingly, using the fuel cell for an electric power generator of an on-site type and vehicle mounting has been recently developed.

Hydrogen of high purity is required to generate electricity by the fuel cell, and various kinds of methods for generating this hydrogen are researched and utilized. Among these methods, a method for taking-out hydrogen from gasoline, hydrocarbon such as butane, propane, etc., alcohol such as methanol, etc., which is called fuel reformation, is excellent in the advantages of infra-maintenance of fuel supply. In the fuel reformation, there is a case in which hydrogen is mainly generated by a steam reforming reaction under the existence of steam and a catalyst by a device called a reformer with gasoline, hydrocarbon such as butane, propane, etc., alcohol such as methanol, etc., CO, etc. as a starting raw material. There is also a case in which hydrogen is mainly generated by a partial oxidation reforming reaction under the existence of oxygen, nitrogen and a catalyst with gasoline, hydrocarbon such as butane, propane, etc., alcohol such as methanol, etc. as a starting raw material. There is further a case in which hydrogen is generated by a reforming reaction using both the steam reforming reaction and the partial oxidation reforming reaction.

As another method utilizing the raw fuel, there is also a method utilizing an organic hydrides such as cyclohexane, decalin, etc. which is in a liquid state at room temperature as a carrier of hydrogen storage and supply. In this method, for example, hydrogen is taken-out by decomposing cyclohexane/decalin into hydrogen and benzene/naphthalene by heating the cyclohexane/decalin under a catalyst. The collected benzene/naphthalene reacts with hydrogen again, so that the collected benzene/naphthalene is returned to cyclohexane/decalin, which is reutilized.

Accordingly, a fuel cell is constructed by a raw fuel storing section for storing raw fuel of liquid hydrocarbon such as gasoline, etc. or alcohol, mixed liquid with water in accordance with necessity, or organic hydrides such as cyclohexane, decalin, etc., an evaporating section for evaporating the raw fuel, a reforming section for processing the reforming reaction of the evaporated raw fuel constructed by the steam reforming reaction, the partial oxidation reforming reaction, or the reforming reaction using both the steam reforming reaction and the partial oxidation reforming reaction to make reformed gas, or a hydrogen converting section for converting the raw fuel to hydrogen gas by dehydrogenation reaction processing of the raw fuel constructed by a catalyst reaction, and a fuel cell main body for generating electric power by the reformed gas or the hydrogen gas. Here, when the liquid hydrocarbon such as gasoline, etc. or alcohol and the mixed liquid with water in accordance with necessity are set to the raw fuel and the raw fuel is evaporated in the evaporating section, the raw fuel is sprayed through a nozzle to a surface of a heat transfer provided in a heat exchanger for evaporation and is thinly uniformed on the heat transfer face in the evaporating section. Thus, heat exchange performance is improved and the responsibility of an evaporating amount is improved.

In the case of the fuel cell in which the liquid hydrocarbon such as gasoline, etc. or the alcohol and the mixed liquid with water in accordance with necessity are set to the raw fuel, there is also a case in which no evaporating section is arranged and the reformed gas is obtained by directly processing the raw fuel in a liquid state in the reforming reaction. In this case, the fuel cell is constructed by the raw fuel storing section, the reforming section and the fuel cell main body.

In the spraying method, a carburetor system utilizing the Venturi effect, or a fuel injection system (hereinafter called an FI system) for pumping the raw fuel is mainly adopted.

The carburetor system is a system in which the raw fuel is sucked up by reduced pressure caused by the Venturi effect, and is mixed with sent gas and then the mixed raw fuel and gas are supplied. The degree of the reduced pressure for sucking-up the raw fuel can be adjusted by speed of the gas sent into a supply tube, i.e., volume per unit time.

On the other hand, in the FI system, the raw fuel is injected by the pump at high pressure. In the system, as the droplets of the raw fuel is injected at the speed of a constant value or more from the start of injection, the concentration of the raw fuel gas is adjusted by an injecting time and an injecting speed.

Further, in the fuel cell of the system in which there is no evaporating section and the liquid hydrocarbon such as gasoline, etc. or the alcohol and the mixed liquid with water in accordance with necessity are set to the raw fuel and the raw fuel in a liquid state is directly processed in the reforming reaction, a method for spraying the raw fuel to the reformer is adopted, and with respect to the spraying method, the above carburetor system or the above FI system is adopted.

Furthermore, when the organic hydrides such as cyclohexane, decalin, etc. is set to the raw fuel and the dehydrogeneration reaction processing is performed, a method for blowing the raw fuel in a liquid state against the hydrogen converting section is adopted, and the above carburetor system or the above FI system is adopted in the blowing method.

A consideration is also taken with respect to the above-mentioned fuel cell in which the reformer or the hydrogen converting section is not arranged, and the raw fuel of the liquid hydrocarbon such as gasoline, etc. or the alcohol, the mixed liquid of the liquid hydrocarbon such as gasoline, etc. or the alcohol with water, or the organic hydrides such as cyclohexane, decalin, etc. is directly oxidized by an electrode. In this case, a method for flowing the raw fuel in a liquid state into the electrode having an oxidizing electrode catalyst. or a method for blowing the raw fuel by the nozzle is adopted. When the raw fuel was blown by the nozzle, the above carburetor system or the above FI system is adopted.

However, when the raw fuel is blown from the nozzle, the spray state of the raw fuel, i.e., droplets of the raw fuel are not sufficiently small in size, and its dispersion is not restrained in uniformity. Accordingly, there is a problem when hydrogen, the reformed gas or the hydrogen gas is efficiently taken out with good responsibility. Further, neither the carburetor system nor the FI system is sufficient as a system for controlling the concentration of the raw fuel in the gas. Moreover, there is a problem that the quantity ratio of the raw fuel and the gas as a medium are not perfectly controlled. Namely, in the carburetor system, it is difficult to make an adjustment to a small range of the ratio, since the degree of the reduced pressure is determined by the speed of the gas sent into the supply tube. There is a mechanism able to change the amount of the raw fuel sucked up to a certain degree, being irrespective of the amount of the sent gas by varying the size of a portion for sucking-up the raw fuel. However, the mechanism cannot be perfectly freely controlled. When the amount of the raw fuel is increased under the condition of a constant amount of the sent gas, there is also a problem in which the formation of fine particles of the raw fuel is further deteriorated. On the other hand, in the FI system, since the raw fuel is injected at high pressure, the speed of the particles of the raw fuel is the same as a constant value or more from the beginning when the raw fuel is first mixed with the gas. Therefore, there was a limit on controlling the concentration of the raw fuel by varying the speed of the sent gas.

Accordingly, in the carburetor system and the FI system, the concentration of the droplet of the raw fuel within the gas, or the quantity ratio of the raw fuel and the gas as a medium cannot be controlled perfectly freely, accurately and rapidly. As a result, problems occurred with respect to the deterioration of load changing responsibility and reduction in energy efficiency.

### SUMMARY OF THE INVENTION

Therefore, the invention according to the first aspect of the present invention resides in a fuel cell power generator comprising: a raw fuel storing section for storing a raw fuel selected from liquid hydrocarbon such as gasoline, etc. or alcohol, mixed liquid of liquid hydrocarbon such as gasoline, etc. or an alcohol with water, and organic hydrides such as cyclohexane or decalin; and a fuel cell main body for generating electric power by hydrogen generated from the raw fuel; wherein a fuel supply section for supplying the raw fuel as a droplet spray, e.g. in a uniform spray shape or continuous spray of uniform droplets. Thus, when the raw fuel is supplied, a fuel droplet exists in a sufficient small size and the dispersion of a droplet distribution is restrained. The concentration of the droplet of the raw fuel within the gas, or the quantity ratio of the raw fuel and the gas as a medium can be controlled by free design irrespective of the amount and the moving state of gas as a moving medium of the fuel droplet. Thus, the taking-out of hydrogen can be efficiently realized with good responsibility. Accordingly, the fuel cell having excellent performance against load changing and good efficiency can be realized.

The present invention is described below in detail every raw fuel. First, the present invention according to the second aspect of the invention resides in a fuel cell power generator comprising: a raw fuel storing section for storing the raw fuel selected from liquid hydrocarbon such as gasoline, alcohol, and mixed liquid of liquid hydrocarbon such as gasoline or alcohol with water among the raw fuels; and an evaporating section for evaporating this raw fuel; and a reforming section for processing the evaporated raw fuel in a steam reforming reaction, a partial oxidation reforming reaction, or areforming reaction using both the steam reforming reaction and the partial oxidation reforming reaction to make reformed gas; and a fuel cell main body for generating electric power by the reformed gas; wherein a fuel supply section for supplying raw fuel as a droplet spray, e.g. in a uniform spray shape or continuous spray of uniform droplets, is arranged in the evaporating section.

Thus, the raw fuel can uniformly reach a contact face of the evaporating section, and the raw fuel can be continuously and uniformly supplied regardless of the existence of medium flow. Accordingly, the evaporated raw fuel can be supplied to a catalyst face of the reformer and converted to reformed gas with good responsibility and good efficiency. Further, since the droplet diameter is small and the dispersion is restrained in the spay state of the raw fuel, the evaporation can be continuously and precisely realized following the amount of the raw fuel. As a result, the fuel cell excellent in the responsibility of a load change is realized.

Heat exchange ratio can be improved by arranging a heat exchange section provided on the contact face of the evaporating section not only in front of the evaporating section but also in the back of the evaporating section. The ratio can be improved by passing piping twice and commonly using it.

Next, the invention according to each of the third, the forth and the fifth aspect of the present invention is an fuel cell power generator characterized in that the generator has a fuel supply section for supplying the raw fuel to a reforming section, a hydrogen converting section or a fuel cell electrode section as a droplet spray, e.g. in a uniform spray shape or continuous spray of uniform droplets.

Conventionally, the fuel cell power generator had a raw fuel storing section for storing the raw fuel of the liquid hydrocarbon such as gasoline, etc. or alcohol, or mixed liquid of the liquid hydrocarbon such as gasoline, etc. or alcohol with water among the raw fuels. It also has a reforming section for processing the raw fuel in a steam reforming reaction, a partial oxidation reforming reaction, or a reforming reaction using both the steam reforming reaction and the partial oxidation reforming reaction to make reformed gas. A fuel cell main body for generating electric power by the reformed gas is provided.

Also a fuel supply section for supplying the raw fuel to the reforming section is arranged. In such a fuel cell power generator, it is said that reforming efficiency is low in comparison with the supply of the raw fuel to the reformer in the evaporated state. As shown in a Japanese Patent Application 1-251558A, these system was limited to an auxiliary raw fuel supply method for following the load change, raw fuel was sprayed in the state of mixture of the raw fuel with high temperature reforming gas which was separately reformed, when the load was increased.

In the third aspect of the present invention, the fuel cell power generator is characterized in that a fuel supply section for supplying the raw fuel to the reforming section in a uniform spray shape is provided. Thus, even when the fuel is directly sprayed to the reforming section, the reforming reaction condition is optimized. For example, the reforming reaction is stabilized and can be realized with good reproducibility by adjusting conditions, such as the size of the sprayed droplet diameter, its dispersion degree, spray concentration (liquid fuel amounts per unit gas volume), the collision speed of the sprayed droplet with the reforming section surface, etc. As a result, the reforming reaction having excellent efficiency and responsibility can be realized.

In the method for supplying the raw fuel of the organic hydrides such as cyclohexane, decalin, etc. to the hydrogen converting section and taking-out the hydrogen gas by a dehydrogeneration reaction, the hydrogen gas can be generated in a stationary state at high flow speed by spraying the constant amount of the raw fuel from the nozzle to a platinum catalyst heated to reaction temperature. Then, in the forth aspect of the present invention, the fuel cell power generator is characterized in that a fuel supply section for supplying the raw fuel to the hydrogen converting section in a uniform spray shape is arranged. Thus, a raw fuel layer in a uniform thin film shape on the catalyst can be easily obtained, so that the hydrogen generating reaction is realized smoothly and stably, and the generating speed of hydrogen is improved. And a liquid dehydrogenerated and changed to benzene, naphthalene, etc. is excluded by freely designing and optimizing spray vigor and vigor of the gas so that the organic hydrides such as cyclohexane, decalin, etc. as the raw fuel can be continuously supplied to the catalyst surface at any time.

Furthermore, in the conventional fuel cell power generator for directly supplying the raw fuel to the fuel cell electrode section, an electrode reaction was slow and a fuel cell could be realized only at low electric current density. To solve the problem, in the invention according to the fifth aspect of the present invention, a fuel supply section for supplying the raw fuel to a fuel cell electrode section in a uniform spray shape is arranged. By the arrangement, electrode reaction speed is improved and electric current density can be increased. As a result, it becomes possible to reduce excessive voltage which is required for reaction in anode, and to realize the electrode reaction to the almost near extent as the case of a fuel cell device in which the hydrogen gas is supplied to electrode section, so that the sufficient output voltage is obtained.

Factors in improvement in the electrode reaction are the goodness of reactivity in the gas state and consistency of the supply efficiency in the liquid state. The improvement is realized since the raw fuel can be supplied on an electrode at the amount pace as almost the same pace as in the case of the liquid by supplying the raw fuel in the uniform spray shape formed as fine particles, despite the raw fuel is almost in the same state of the gas. Another factor in improvement is that an agitating effect is raised by physically blowing the sprayed droplet, etc.

In the sixth aspect of the present invention, the fuel cell power generator is characterized in that an electric adjusting control section able to arbitrarily set the concentration of the raw fuel in a spray state is arranged in the fuel supply section according to any one of first to fifth aspect of the invention. As the supply amount of the raw fuel can be precisely controlled with respect to the feedback information of an electric power utilizing state, the conversion to the reformed gas having rich hydrogen can be efficiently performed, and the generating amount of carbon monoxide can be restrained. Further, a carbon monoxide transformer conventionally utilized can be made compact, and the entire device can be made compact.

As the electric adjusting control section, a supply amount adjusting valve of the raw fuel, a controller of a supply time, a supply interval and a supply flow speed, and/or a feedback controller to the adjusting valve and the controller using the detection of a spray state, etc. are provided.

In the seventh aspect of the present invention, the fuel supply section characterized in the invention according to the sixth aspect of the invention has a micro pump having a fuel chamber for filling-up the raw fuel, pressurizing means for pressuring the fuel chamber wall, a nozzle for discharging the fuel by a change in the volume of the fuel chamber and connected to the fuel chamber and sealed by a fuel liquid. The raw fuel is discharged from the nozzle and evaporated. The supply section also has an introducing hole for replenishing the discharged fuel to the fuel chamber. With this fuel supplying section, the discharging operation is positively performed, and the micro pump having small discharge capacity can be easily formed in the range of a several millimeter square in large quantities. Consequently, discharge droplets having very small amounts can be continuously formed.

Here, a structure of the seal using the fuel liquid has no valve structure in the introducing hole for supplying the raw fuel to at least one fuel chamber, and it is arranged so as not to cause a large amount of backflow from the small introducing hole when the raw fuel is discharged from the nozzle by the pressure changes due to pressurization or decompression in the fuel chambers.

The introducing holes of the plural fuel chambers can be respectively connected to the same flow path, and plural nozzles can be provided with respect to the one fuel chamber.

The pressurizing means may be constructed by a member for generating a predetermined amplitude or vibration including a member such as a piezoelectric/electrostrictive element, which directly converts an electric signal to a physical operation. A pressurizing means can be general pressurizing means such as a solenoid coil, etc. In particular, the piezoelectric/electrostrictive element is excellent and suitable in its high-speed reactivity, generating force, the accuracy of a vibrating amount. The structure of the piezoelectric/electrostrictive element is not limited to the mono-layer structure in which the piezoelectric/electrostrictive element is sandwiched by electrodes, and is not limited to complex structure in which the piezoelectric/electrostrictive element is combined with another elastic material to enlarge a displacing amount of element, etc. An actuator formed by laminating the piezoelectric/electrostrictive element and an electrode over multiple layers is suitable because of its low voltage drivability and high displacement property.

In the eighth aspect of the present invention, the pressurizing means of the micro pump according to the seventh aspect of the invention is constructed by a piezoelectric/electrostrictive element arranged on the wall face of at least one portion of the fuel chamber. Thus, the raw fuel can be efficiently formed and sprayed as fine droplets with lower power consumption. Further, it can be reliably sprayed at a high frequency of several kHz to several ten MHz. Moreover, since evaporation efficiency is good, there is no standby time for completion of preheating required in the heating means in the conventional fuel cell when a system starts. Accordingly, the fuel cell can be rapidly utilized. Further, since a green sheet method, a printing method, etc. can be adopted as the manufacturing method, a fine structure as the micro pump can be easily manufactured in large quantities.

In the ninth aspect of the present invention, the pressurizing means of the micro pump according to the seventh aspect of the invention is arranged independently of the fuel chamber, and one pressurizing means providing pressure is attached to one or more fuel chambers. Thus, the fuel can be collectively discharged from the plural nozzles only by operating at least one pressurizing means. Further, the pressurizing means itself is large-sized, so that the scope of design is widened and large displacement can be generated in comparison with the conventional case. Further, the pressurizing means can be separately formed from the pressure chamber. For example, by using a material for increasing the displacing amount the pressurizing means can be formed separately formed from the fuel chamber. And, when the material of the fuel chamber is set to a metal, toughness is improved and durability can be raised. Since no material component forming the pressurizing means is diffused into the substrate having the fuel chamber, the material of the substrate is stabilized and durability is further improved.

With respect to the abutting degree of the pressurizing means and the pressure chamber, it is not necessary that the pressurizing means and the pressure chamber always abut on each other. Although the pressurizing means and the pressure chamber are separated from each other at a constant distance in normal state, it is sufficient to abut at least vibrating portions or movable portions to transmit the pressure and the vibration only when it acts. However, when the vibration is simultaneously transmitted to the plural pressure chambers by the same pressurizing means, it is preferable to abut the pressure chambers and the pressurizing means on each other in normal state. Concretely, the pressure chamber and the pressurizing means can be held in the abutting state by a mechanical adjusting means such as a spring, a screw, etc. Further, the pressure chamber and the pressurizing means can be fixed by an adhesive, an adhesive including filler, a thermal diffusion method, etc. Further, the movable portion of the pressurizing means is not necessarily directly in proximity to or contact with the fuel chamber, and it is sufficient that the movable portion abuts on the pressurizing means through at least one transmission member for transmitting the vibration to the fuel chamber. In this case, it is unnecessary to align the position of the pressurizing means by making an adjustment of the transmission member, and the number of pressurizing means can be reduced, so that cost is reduced.

In the tenth aspect of the present invention of fuel cell power generator, the fuel supply section according to the sixth aspect of the invention has an ejecting unit having a nozzle exposed to a fuel ejection space at one end thereof and for ejecting the fuel. It also has a chamber in which the other end of the nozzle for the fuel ejection and one end of a fuel supply pipe are communicated.

It has a pressurizing pump having a discharge section connected to the other end of the fuel supply pipe, and also has an introducing section communicated with the raw fuel storing section. A pressurizing pump pressurizes the fuel which is stored in the raw fuel storing section and introduced from the introducing section to discharge it from the discharge section, and ejecting this fuel to the fuel ejecting space through the nozzle for the fuel ejection in the ejecting unit. The ejecting unit has plural nozzles for the fuel ejection, and also has means for changing the volume of the chamber in at least one of the wall face of the chamber, and is constructed such that the fuel ejected from the nozzles for the fuel ejection is formed as fine particles. Thus, the raw fuel pressurized by the pressurizing pump is finely divided and ejected from the plural nozzles for the fuel ejection. Accordingly, when air bubbles are generated in the raw fuel, this air bubbles are finely broken. As a result, a large change in the ejecting amount due to the existence of the air bubble can be avoided. Further, the volume of the chamber is changed so that vibrational energy is given to the liquid ejected by this change. Accordingly, the raw fuel is ejected as a droplet formed as fine particles from the nozzle for the fuel ejection. In this case, the size of the droplet formed as fine particles is changed by a volume changing condition of the chamber such as the pressure applied to the raw fuel liquid, the amplitude and frequency of the vibration, etc., the shape of the flow path, the size of the flow path, physical properties such as viscosity and surface tension of the raw fuel liquid, etc. However, when the period of the vibration applied to the raw fuel liquid is shorter than a time for moving the raw fuel liquid by the length corresponding to the diameter of an end portion (an opening exposed to a raw fuel ejecting space) of the nozzle in the vicinity of the end portion of this nozzle for the raw fuel ejection, the size of this ejected raw fuel droplet is approximately equal to or smaller than the diameter of the end portion of the raw fuel ejecting nozzle. The diameter is uniform unless the period of the vibration and the moving speed of the raw fuel liquid are changed. Accordingly, if the diameter of the end portion (opening) exposed to the raw fuel liquid ejecting space of the above nozzle for the raw fuel ejection is set to several ten µm or less, it is possible to eject the raw fuel droplet extremely finely uniformed so that the ejected fuel can be formed into fine particles as a droplet having a suitable diameter. Accordingly, the taking-out of hydrogen can be efficiently realized with good responsibility, and the fuel cell having excellent load changing characteristics and good efficiency can be realized. Further, in accordance with the above construction, since the pressure required to eject the raw fuel liquid is generated by the pressurizing means, this fuel can be stably ejected and supplied as predetermined desirable fine particles even when the environment of the fuel ejecting space, e.g., pressure, temperature, etc. are suddenly changed by a change in the operating condition of the fuel cell device, etc. Further, in the above-mentioned carburetor system, the raw fuel flow rate is determined in accordance with the airflow speed in a space as the liquid raw fuel ejecting space, and the an atomizing degree is also changed dependently on this airflow speed. However, in accordance with the fuel supply section of the present invention, the raw fuel liquid maintaining a preferable spray state can be ejected by a required amount irrespective of the airflow speed. Additionally, in accordance with the fuel supply section in the present invention, the device can be inexpensively manufactured since no compressor for supplying assist air is required while the conventional FI system requires supplying the assist air to a nozzle section to promote the atomizing of the fuel.

In the invention according to the eleventh aspect of the present invention, the means for changing the volume of the chamber is characterized in the invention according to the tenth aspect is constructed by a piezoeiectric/electrostrictive element arranged on the wall face of at least one portion of the chamber. Thus, the volume of the chamber is changed by operating the piezoelectric/electrostrictive element so that vibrational energy is given to the raw fuel liquid ejected by this change. Accordingly, the raw fuel can be reliably efficiently formed and sprayed as fine particles with lower power consumption Further, it can be reliably sprayed at a high frequency of several kHz to several ten MHz. Further, since evaporation efficiency is good, there is no standby time for completion of preheating required in the heating means in the conventional fuel cell when a system starts. Accordingly, the fuel cell can be rapidly utilized. Further, since a green sheet method, a printing method, etc. can be adopted as the manufacturing method, a fine structure can be easily manufactured in large quantities as the micro pump.

In the invention according to the twelfth aspect of the invention, the means for changing the volume of the chamber is characterized in the invention according to the tenth aspect is constructed by pressurizing means arranged independently of the chamber, and one pressurizing means is attached to one or more fuel chambers, and gives a pressure. Thus, the fuel can be collectively formed as fine particles from the plural nozzles only by operating one pressuring means. Further, the pressurizing means itself is large-sized and the scope of design can be widened and large displacement can be generated in comparison with the conventional case. Further, the pressurizing means can be formed separately from the chamber. For example, the pressurizing means can be formed separately from the chamber by a material for increasing the displacing amount. And, the material of the chamber is set to a metal, toughness is improved and durability can be raised. Since no material component for forming the pressurizing means is diffused to a portion having the chamber, the material of the portion having the chamber is stabilized and durability is further improved.

In the invention according to the thirteenth aspect of the invention, the fuel cell power generator is characterized in that the fuel supply section according to tenth aspect has a solenoid valve for opening and closing a fuel passage in one portion of the fuel supply pipe. Thus, the ejecting amount from the ejecting unit can be precisely controlled by the operation of the solenoid valve. As a result, it is possible to realize a fuel cell device having excellent load changing responsibility multiplied by the effect of the formation of the fine particles of the raw fuel liquid.

### BRIEF DESCRIPTION OF THE DRAWINGS

Fig. 1 is a block diagram schematically showing a reformer connected to a fuel cell of the present invention.
Fig. 2 is a sectional enlarged view of a raw fuel supply section 6.
Fig. 3 is an explanatory view showing another embodiment mode of the raw fuel supply section 6 shown in Fig. 2.
Fig. 4 is an explanatory view showing another embodiment mode of Figs. 2 and 3.
Fig. 5 is a perspective view showing the position relation of a vibrating source 13 and a flow path 20.
Fig. 6 is an explanatory view showing another embodiment mode of Figs. 2 and 3.
Fig. 7 is an explanatory view showing an embodiment of a hydrogen converting section connected to the fuel cell of the present invention.
Fig. 8 is an explanatory view showing another embodiment mode with respect to the fuel cell of the present invention.

### DESCRIPTION OF THE PREFERRED EMBODIMENTS

Embodiment modes of a fuel cell in the present invention will next be explained in detail.

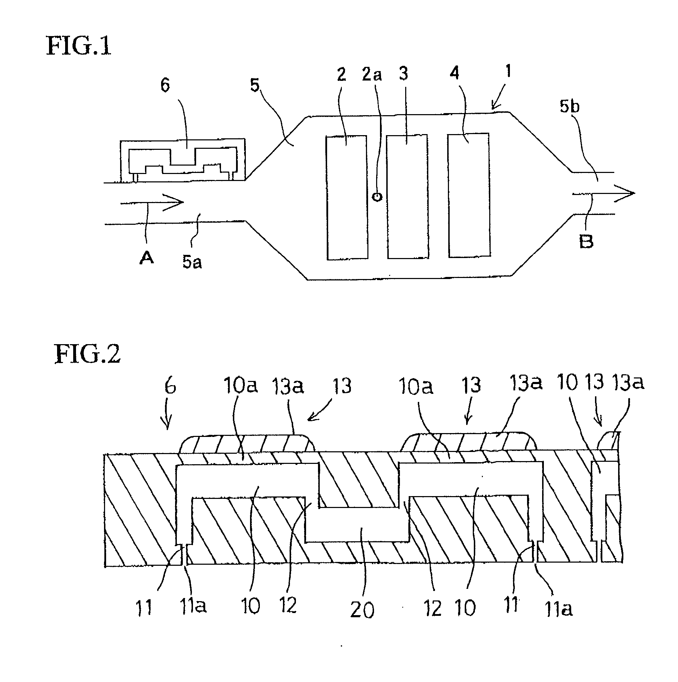

Fig. 1 is a block diagram schematically showing a reformer connected to the fuel cell.

In the reformer 1, an evaporating section (gas supply section) 2, a catalyst body 3 and a CO reducing section 4 are arranged within a metallic can body 5 as a fluid flow path. Heat is generated in the evaporating section 2 by combustion heat or electric heat. The evaporating section 2 is normally arranged on the upstream side of the catalyst body 3. A sensor 2a for controlling the generating heat amount of the evaporating section 2 is arranged on the downstream side or the rear stream side of the evaporating section 2. The catalyst body 3 includes at least one of catalyst components having a catalyst action with respect to a steam reforming reaction, a partial oxidation reaction or a decomposing reaction, a CO shift reaction, etc. The CO reducing section 4 is constructed by a catalyst causing a CO selective oxidation reaction, and is required to reduce CO and supply high hydrogen concentration to a fuel cell main body.

A raw fuel supply section 6 connected to a tank for storing a raw fuel which is constructed by mixing methanol and water is attached to an inlet hole 5a of the can body 5. The raw fuel is sprayed by its own strength as a micro pump from this raw fuel supply section 6. The sprayed fuel reaches an outlet hole 5b via the catalyst body 3 and the CO reducing section 4 after passing through the evaporating section 2. The obtained fluid B having rich hydrogen is conveyed to the fuel cell main body arranged on the downstream side of the reformer.

Typical reaction temperatures for the steam reforming reaction or the partial oxidation reaction or the decomposing reaction, the CO shift reaction and the CO partial oxidation reaction are respectively set to the ranges of 500 °C or more, 200 to 300 °C, and 100 to 200 °C. A temperature difference is caused between the catalyst body of the steam reforming reaction or the partial oxidation reaction or the decomposing reaction and the catalyst body of the CO shift reaction. Therefore, heat is collected by arranging a heat exchanger within the fluid flow path. The collected heat is used to preliminarily heat the reaction fluid A and is also used to be supplied to a member for heating the catalyst body 3. The kind of the heat exchanger is not limited, and for example, a pipe type heat exchanger, a plate shape type heat exchanger, etc. can be used. After the heat exchange, it is preferable to flow the heat-carrier in a direction requiring the heat on the upstream side, but the heat-carrier can be also flowed on the downstream side.

Fig. 2 shows a sectional enlarged view of the raw fuel supply section 6.

In the raw fuel supply section 6, the raw fuel is supplied to left-hand and right-hand pressure chambers 10 from a flow path 20 connected to the tank storing the raw fuel. The raw fuel is discharged as droplets by a reduction in the volume of the pressure chamber 10 from each discharge port 11. The discharge port 11 having a nozzle hole 11a which is opened outward below one end of the pressure chamber 10 is arranged within the pressure chamber 10. An introducing hole 12 is arranged at the other end of an arranging face of this discharge port 11, and connection with the flow path 20 is made through the introducing hole 12. A vibrating source 13 is individually arranged above an upper wall portion of the pressure chamber 10. The vibrating source 13 is constructed by a piezoelectric/electrostrictive element 13a in which an upper electrode, a piezoelectric/electrostrictive layer and a lower electrode are laminated. The piezoelectric/electrostrictive layer is deformed by an electric field caused between the upper and lower electrodes by applying a predetermined voltage signal to the piezoelectric/electrostrictive element. Therefore, wall portions of the plural pressure chambers 10 fixedly attached with the piezoelectric/electrostrictive element are simultaneously deformed. Thus, the liquid supplied to each pressure chamber 10 is simultaneously discharged by pressure caused in each pressure chamber 10 as a droplet from the discharge port 11. When the lower face of the vibrating source 13 is oppositely raised upward and is returned to the original position, thin wall portions 10a of the plural pressure chambers 10 are also simultaneously returned to the original shapes. Then, the liquid is supplied from the flow path 20 to each pressure chamber 10 through the introducing hole 12 by negative pressure caused in each pressure chamber 10 so as to prepare for the next ejection. The droplet can be ejected in a spray shape by repeating this operation at high speed. Thus, the raw fuel can be sprayed even when no conveying gas is flowed as in the conventional case. Therefore, the entire device can be made compact by omitting the evaporating section 2 which requires heat by arranging the raw fuel supply section 6 in proximity to the catalyst section 3. The raw fuel supply section 6 is not only attached to the entire circumference of the inlet hole 5a of the can body 5 to perform the proximity, but can be also projected from the can body 5 so as to be located in front of the catalyst section 3.

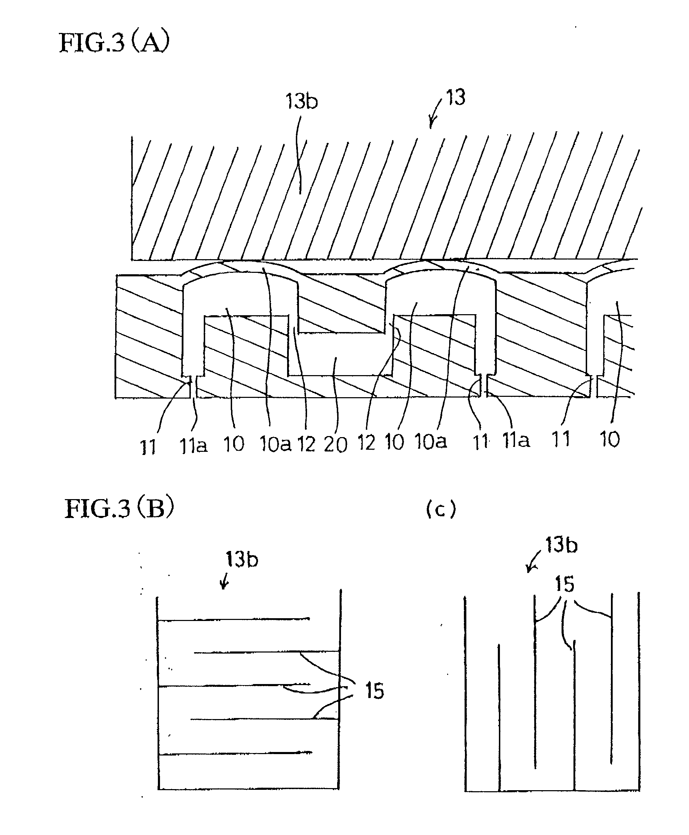

Fig. 3A is an explanatory view showing another embodiment mode of the raw fuel supply section 6 shown in Fig. 2. A discharge port 11 having a nozzle hole 11a opened outward is arranged downward at one end of the pressure chamber 10. An introducing hole 12 is arranged at the other end of a face on which is provided the discharge port 11. The pressure chamber 10 is connected to a flow path 20 through this introducing hole 12. A thin wall portion 10a of the pressure chamber 10 is particularly molded outward in a convex shape, and a concave portion is formed between the thin wall portion 10a and a thin wall portion 10a of another pressure chamber 10 transversally located.

On the other hand, a vibrating source 13 formed as a separate body is arranged above an upper wall portion of the pressure chamber 10. The lower face of the vibrating source 13 is smoothly formed. In a normal mode, the lower face and the thin wall portion 10a of the pressure chamber 10 are held in a contact position relation. This vibrating source 13 is also formed in an elongated shape in the transversal direction so as to reach the upper wall portion of another pressure chamber 10 transversally arranged in parallel.

The vibrating source 13 is constructed by an actuator 13b in which a piezoelectric/electrostrictive element and an electrode are laminated over multiple layers. The vibrating source 13 is excellent in low voltage driving and high displacing properties as a structure in which element vibrates in the vertical direction. The lower face of the vibrating source 13 in an illustrated position is lowered downward by applying a predetermined voltage signal to this actuator 13b, and the outward convex thin wall portion 10a of the plural pressure chambers 10 is simultaneously deformed. Thus, the liquid supplied to each pressure chamber 10 is simultaneously discharged from the discharge port 11 as a droplet by pressure caused in each pressure chamber 10. When the lower face of the vibrating source 13 is oppositely raised upward and is returned until the original position, the thin wall portions 10a of the plural pressure chambers 10 are also simultaneously returned to the original shape. Then, the liquid is supplied from the flow path 20 to each pressure chamber 10 through the introducing hole 12 by negative pressure caused in each pressure chamber 10 so as to prepare for the next ejection. The droplet is ejected in a spray shape by repeating this operation.

Figs. 3B and 3C illustrate the modes of a multi-layered actuator 13b respectively utilizing a piezoelectric longitudinal effect and a piezoelectric transversal effect. These modes are selected in accordance with required driving voltage, displacing amount and shape, etc.

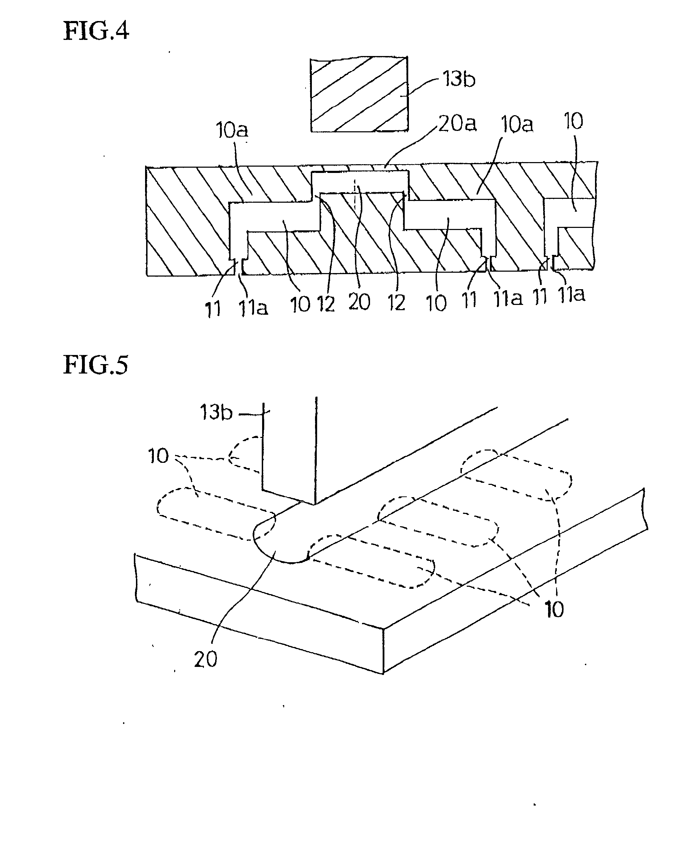

Figs. 4 and 5 are explanatory views showing other embodiment modes of Figs. 2 and 3. A discharge port 11 having a nozzle hole 11a opened outward is arranged downward at one end of the pressure chamber 10. In this embodiment mode, an introducing hole 12 is arranged on the upper face at the other end of a face on which the discharge port 11 is provided. Moreover, the pressure chamber 10 is connected to a flow path 20 through the introducing hole 12. Accordingly, the flow path 20 is located above the pressure chamber 10, and is formed in a position relation closer to the upper face of the raw fuel supply section 6.

On the other hand, a vibrating source 13 formed as a separate body and partially fixed to a base frame is arranged above an upper wall portion of the pressure chamber 10. The lower face as a movable portion of the vibrating source 13 and a thin wall portion 10a are smoothly flat formed.

Fig. 5 is a perspective view showing the position relation of this vibrating source 13 and the flow path 20. A pair of pressure chambers 10, 10 shown in Fig. 4 is transversally arranged in a line, and the vibrating source 13 is formed in the longitudinal shape along the longitudinal direction of the flow path 20 located above the pressure chambers 10 and connected to the plural pressure chambers 10.

This vibrating source 13 also has a structure in which it vibrates vertically as an actuator 13b. The lower face of the vibrating source 13 in an illustrated position is lowered downward with respect to the attached base frame by applying a predetermined voltage signal so that the flow path 20 is deformed. Thus, the liquid is simultaneously pumped to each pressure chamber 10 by pressure caused in the flow path 20. The supplied liquid is simultaneously discharged as a droplet from the discharge port 11 of each pressure chamber 10. When the lower face of the vibrating source 13 is oppositely raised upward and is returned until the original position, the flow path 20 is also returned to the original shape and the liquid is supplied to the flow path 20 by the negative pressure of this flow path 20 so as to prepare for the next ejection. The droplet is ejected in a spray shape by repeating this operation.

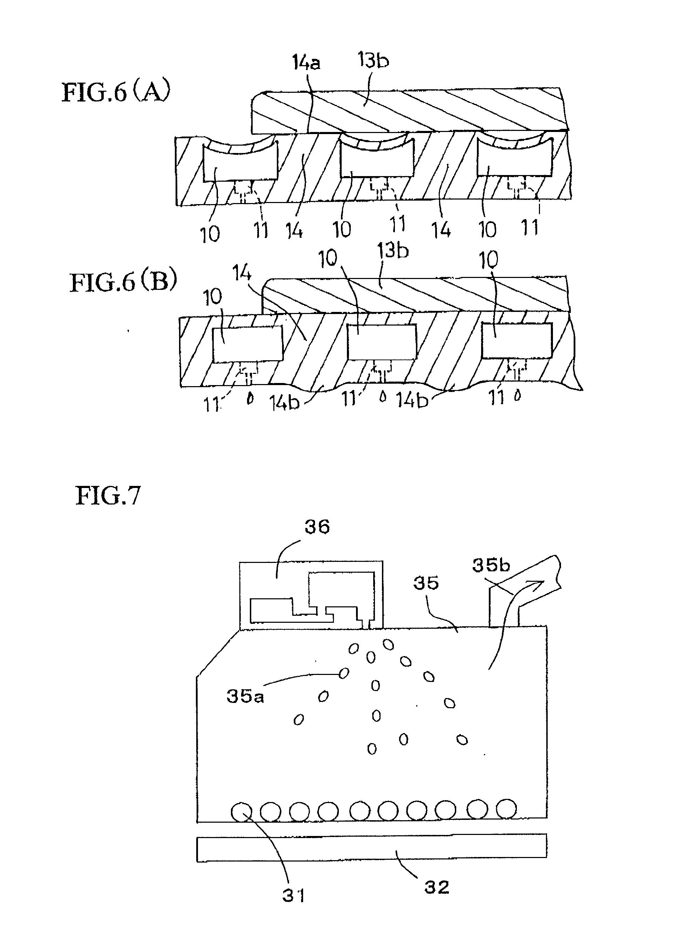

Fig. 6 is also an explanatory view showing another embodiment mode. A discharge port 11 having a nozzle hole 11a opened outward is arranged downward at one end of a pressure chamber 10, and an introducing hole 12 is arranged at the other end of a face on which the discharge port 11 is provided. The pressure chamber 10 is connected to a flow path 20 through the introducing hole 12. A thin wall portion 10a of the pressure chamber 10 is particularly molded inward in a convex shape, and a bridge portion located between the thin wall portion 10a and a thin wall portion 10a of another pressure chamber 10 transversally located is formed in a position relation relatively projected outward. A vibrating source 13 formed as a separate body is arranged above an upper wall portion of the pressure chamber 10, and a lower face of the vibrating source 13 is smoothly flat formed. In Fig. 6A showing the normal mode, the vibrating source 13 is held in a position relation in which the lower face of the vibrating source 13 and the upper face 14a of the bridge portion 14 are adjacent to each other. This vibrating source 13 is also formed in the long shape in the transversal direction so as to reach the upper wall portion of another pressure chamber 10 transversally arranged in parallel.

The vibrating source 13 also has a structure in which it vibrates vertically as an actuator 13b. The lower face of the vibrating source 13 is lowered downward until the position shown in Fig. 6B by applying a predetermined voltage signal. The bridge portions 14 between the plural pressure chambers 10 are simultaneously deformed downward, and the liquid is supplied from the flow path 20 to each pressure chamber 10 by negative pressure caused by deforming each pressure chamber 10 in a rectangular shape. When the lower face of the vibrating source 13 is oppositely raised upward and is returned until the original position, the bridge portion 14 is also simultaneously returned to the original shape. Thus, the liquid supplied to each pressure chamber 10 is simultaneously discharged from the discharge port 11 as a droplet by the pressure caused in each pressure chamber 10. The droplet is ejected in a spray shape by repeating this operation.

Fig. 7 is a view schematically showing a hydrogen converting section connected to the fuel cell in another embodiment of the present invention. The hydrogen converting section is constructed by a can body 35 having a platinum catalyst 31 heated to 200 to 350 °C by a heater 32 and causing a dehydrogeneration reaction. A raw fuel supply section 36 which is connected to a tank storing the raw fuel constructed by cyclohexane is attached to the upper wall face of the can body 35. A raw fuel droplet 35a changed to fine particles and sprayed from the raw fuel supply section 36 to the interior by own function as a micro pump is converted to hydrogen and benzene on the catalyst 31 arranged on the bottom face of the can body 35. A mixing gas 35b mixed with the gas of hydrogen and benzene is taken out of the can body 35 of the converting section, and is then separated into hydrogen and liquid benzene by an unillustrated cooling device and a gas/liquid separator, and is used to generate electric power.

Here, in the fuel cell power generating system for obtaining an output of about 3 kW/h, about 20 L of hydrogen per minute is required. Accordingly, when 35 mL of cyclohexane per minute is supplied by using the fuel supply section for realizing auniform spray in the present invention, the pertinent amount of hydrogen is obtained, and a hydrogen converting ratio close to about 100 % is obtained.

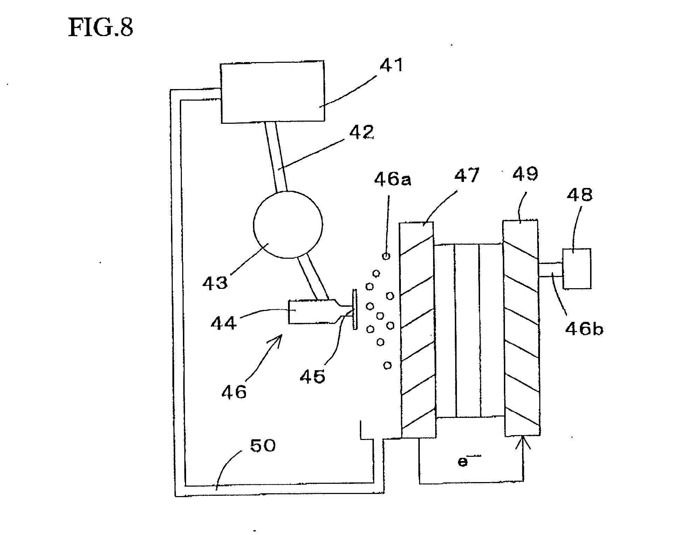

Fig. 8 is a view schematically showing a fuel cell power generator in still another embodiment of the present invention. A tank 41 for storing the raw fuel composing methanol and water mixed is connected to a pressurizing pump 43 for pressurizing the fuel to spray this fuel by a fuel supply pipe 42. A fuel supply section 46 is formed with the pressurizing pump 43, a solenoid valve 44 for opening and closing a fuel passage from the pressurizing pump 43, and an ejecting unit 45 for ejecting a fuel droplet formed as fine particles from plural ejecting nozzles. The fuel supply section 46 is arranged toward an electrode portion 47 (anode) of a fuel cell stack. The fuel droplet 46a formed as fine particles is ejected to the electrode portion 47 from the plural ejecting nozzles formed in the ejecting unit 45 by changing the volume of a chamber in the unit. Then, the fuel droplet 46a is converted to carbon dioxide, hydrogen ions and electrons from methanol and water on the electrode surface of the electrode portion 47. The hydrogen ions are moved into a film of the fuel cell stack. In an electrode 49 (cathode), oxygen in the air supplied from a compressor 48 and the electrons react so that water is generated. Thus, the electrons are moved in an external circuit so that an electric current is taken out. The mixed liquid of methanol and water not contributing to the reaction drops downward, and is returned to the tank 41 through a fuel supply collecting pipe 50.

In this fuel cell power generator, when the mixing fuel of methanol and water is continuously sprayed and blown from the fuel supply section 46 to the electrode portion 47 in the condition of 30 microns in droplet diameter and about 6 m/sec in initial velocity from the nozzle, an electric current density of 100 mA/cm² or more and a cell voltage of about 0.8 V are obtained in the external circuit.

The present invention is not limited to each of the above embodiment modes, but various modified examples can be adopted within the scope of the present invention. For example, in the above embodiment modes, although only one fuel supply section is arranged, plural fuel supply sections may be also arranged in accordance with the size and the shape of the evaporating section, the reforming section, the hydrogen converting section or the electrode section, etc. Further, the fuel supply section having the fuel pressurizing pump and the ejecting unit may be also used in the reforming reaction or the dehydrogeneration reaction.

As described in detail, in the present invention according to the first aspect of the invention, the fuel supply section for supplying the raw fuel in a uniform spray shape is arranged. Accordingly, in the supply of the raw fuel, the fuel droplet exists in a state in which the size of the droplet is sufficiently small and its dispersion is restrained. The supply of the raw fuel can be realized by free design irrespective of the amount of a gas as a moving medium of the fuel droplet and a moving state. Accordingly, the taking-out of hydrogen can be efficiently realized with good responsibility, and an efficient fuel cell having excellent performance against load changing can be realized.

In the present invention according to the second aspect of the present invention, the fuel supply section for supplying the raw fuel to the reforming section in a uniform spray shape is arranged in the evaporating section of the fuel cell power generator. Accordingly, the raw fuel can uniformly reach a contact face of the reforming section, and the uniform raw fuel can be continuously supplied even when there is no medium flow. Therefore, the notable effect of being able to efficiently convert the evaporated raw fuel to reformed gas can be obtained. Further, the concentration of the raw fuel within the gas, or the quantity ratio of the raw fuel and the gas as a medium can be controlled perfectly freely and accurately in comparison with the conventional carburetor system or the FI system.

In the invention according to (3) to (5), since the fuel supply section for supplying the raw fuel to the reforming section, the hydrogen converting section or the fuel cell electrode section in a uniform spray shape is arranged. Accordingly, each reaction condition in the reformation, the dehydrogeneration and the electrode reaction can be optimized and the reactions can be realized smoothly and stably.

In the invention according to the sixth aspect of the present invention, the electric adjustment control section able to arbitrarily set the concentration of the raw fuel in the spray state is arranged in the fuel supply section. Therefore, the supply amount of the raw fuel can be accurately controlled with respect to the feedback information of an electric power generation utilizing state. Accordingly, the conversion to the reformed gas having rich hydrogen can be efficiently performed, and the generating amount of carbon monoxide can be restrained. Further, a carbon monoxide transformer conventionally utilized can be made compact and the entire device can be made compact.

In the invention according to the seventh aspect of the present invention, the fuel supply section is amicro pump having a fuel chamber for filling-up the raw fuel, pressurizing means for pressuring the fuel chamber wall, a nozzle connected to the fuel chamber. The nozzle is sealed by a liquid film and discharging the fuel by a change in the volume of the fuel chamber. The fuel supplying section also has an introducing hole for replenishing the discharged fuel to the fuel chamber. Discharging and atomizing the raw fuel are positively performed by the discharging operation. Also the micro pump having a small discharge capacity can continuously form discharge droplets having small amounts in large quantities.

In the invention according to the eighth aspect of the invention, the pressurizing means of the micro pump is constructed by the piezoelectric/electrostrictive element arranged on the wall face of the fuel chamber, so that evaporation efficiency of the raw fuel which has been discharged is good. Accordingly, when a system starts, there is no standby time for completion of preheating as in the conventional heating means. Therefore, the fuel cell can be rapidly utilized. Further, since the green sheet method, etc. can be adopted as a manufacturing method, a fine structure can be formed as the micro pump.

In the invention according to the ninth aspect of the invention, the pressurizing means of the micro pump is arranged independently of the fuel chamber, and one pressurizing means is attached to one or more fuel chambers. Accordingly, the fuel can be collectively discharged from the plural nozzles only by operating one pressurizing means. Further, the pressurizing means itself is large-sized so that the scope of design is widened and large displacement can be generated in comparison with the conventional case. Further, the pressurizing means can be formed separately from the pressure chamber. For example, the pressurizing means can be formed separately from the fuel chamber by a material for increasing the displacement amount. Further, for example, when the material of the fuel chamber is set to a metal, toughness is improved and durability can be increased. Since no material component for forming the pressurizing means is diffused into the substrate having the fuel chamber, the material of the substrate is stabilized and durability is further improved.

In the invention according to the tenth aspect of the present invention, the fuel cell power generator is characterized in that the fuel supply section has a pressurizing pump for ejecting the fuel to the fuel ejecting space through the nozzle for the fuel ejection in the ejecting unit. The ejecting unit has plural nozzles for the fuel ejection, and also has means for changing the volume of the chamber in at least one of the wall face of the chamber, and is constructed such that the fuel ejected from the nozzles for the fuel ejection is formed as fine particles. Accordingly, when air bubbles are generated within the raw fuel, the air bubbles are finely broken and discharged. As a result, a large change in the ejecting amount due to the existence of the air bubble is avoided, and the ejected fuel can be formed into droplets having a suitable diameter as fine particles. Accordingly, the fuel cell for efficiently taking-out hydrogen with good responsibility is obtained. Further, the fuel can be stably ejected and supplied as predetermined desirable fine particles even when the environment (e.g., pressure and temperature) of a fuel ejection space is suddenly changed by a change in the operating condition of the fuel cell device, etc.

In the invention according to the eleventh aspect of the present invention, the means for changing the volume of the chamber is constructed by the piezoelectric/electrostrictive element arranged on the wall face of at least one portion of the chamber. Accordingly, the raw fuel can be efficiently formed as fine particles with further reduced power consumption. Further, the raw fuel is reliably sprayed at a high frequency of several kHz to several ten MHz. Further, since the green sheet method, etc. can be adopted as the manufacturing method, a fine structure can be also formed as the micro pump.

In the invention according to the twelfth aspect of the invention, the means for changing the volume of the chamber is constructed by pressurizing means arranged independently of the chamber, and one pressurizing means is attached to one or more chambers, and gives a pressurized pressure. Therefore, the design scope of the pressurizing means itself is widened and large displacement can be generated. Further, the range of a material selection is also widened and the material of the chamber is stabilized and durability can be further improved.

In the invention according to thirteenth aspect of the present invention, the solenoid valve for opening and closing the fuel passage is arranged in one portion of the fuel supply pipe. Accordingly, since the ejecting amount from the ejecting unit can be precisely controlled by the operation of the solenoid valve, it is possible to realize a fuel cell device having excellent load changing responsibility multiplied by the effect of the formation of the fine particles of the raw fuel liquid.

## Claims

1. A fuel cell power generator comprising:
a raw fuel storing section for storing raw fuel selected from a liquid hydrocarbon such as gasoline, alcohol, mixed liquid of liquid hydrocarbon such as gasoline or alcohol with water, and organic hydrides such as cyclohexane or decalin;
and a fuel cell main body for generating electric power by hydrogen generated from the raw fuel;
wherein a fuel supply section for supplying the raw fuel in a uniform spray shape.

2. A fuel cell power generator comprising raw fuel storing section for storing the raw fuel selected from liquid hydrocarbon such as gasoline, alcohol, and mixed liquid of liquid hydrocarbon such as gasoline or alcohol with water among the raw fuels according to claim 1;
and an evaporating section for evaporating this raw fuel; and a reforming section for processing the evaporated raw fuel in a steam reforming reaction, a partial oxidation reforming reaction, or a reforming reaction using both the steam reforming reaction and the partial oxidation reforming reaction to make reformed gas; and a fuel cell main body for generating electric power by the reformed gas;
wherein a fuel supply section for supplying raw fuel in a uniform spray shape is arranged in the evaporating section.

3. A fuel cell power generator comprising raw fuel storing section for storing a raw fuel selected from liquid hydrocarbon such as gasoline, alcohol, and mixed liquid of liquid hydrocarbon such as gasoline or alcohol with water among the raw fuels according to claim 1;
and a reforming section for processing this raw fuel in a steam reforming reaction, a partial oxidation reforming reaction, or a reforming reaction using both the steam reforming reaction and the partial oxidation reforming reaction to make reformed gas; and a fuel cell main body for generating electric power by the reformed gas;
wherein a fuel supply section for supplying the raw fuel to the reforming section in a uniform spray shape arranged.

4. A fuel cell power generator comprising raw fuel storing section for storing organic hydrides such as cyclohexane or decalin among the raw fuels according to claim 1;
and a hydrogen converting section for processing the raw fuel by a hydrogen generating reaction constructed by a
dehydrogeneration reaction to make hydrogen gas; and a fuel cell main body for generating electric power by the hydrogen gas;
wherein a fuel supply section for supplying the raw fuel to the hydrogen converting section in a uniform spray shape is arranged.

5. A fuel cell power generator comprising raw fuel storing section for storing raw fuel selected from liquid hydrocarbon such as gasoline, alcohol, mixed liquid of liquid hydrocarbon such as gasoline or alcohol with water, and organic hydrides such as cyclohexane or decalin among the raw fuels according to claim 1;
and a fuel cell main body for generating electric power by hydrogen generated from the raw fuel;
wherein a fuel supply section for supplying the raw fuel to a fuel cell electrode section in a uniform spray shape is arranged.

6. A fuel cell power generator according to any one of claims 1 to 5;
wherein an electric adjusting control section able to arbitrarily set the concentration of the raw fuel in a spray state is arranged in the fuel supply section.

7. A fuel cell electric power generator according to claim 6;
wherein the fuel supply section is a micro pump having a fuel chamber for filling-up the raw fuel, pressurizing means for pressuring the fuel chamber wall, a nozzle for discharging the fuel by a change in the volume of the fuel chamber and connected to the fuel chamber and sealed by a fuel liquid, and an introducing hole for replenishing the discharged fuel to the fuel chamber, and the raw fuel is sprayed from the nozzle.

8. A fuel cell power generator according to claim 7;
wherein the pressurizing means of the micro pump is constructed by a piezoelectric/electrostrictive element arranged on the wall face of at least one portion of said fuel chamber.

9. A fuel cell power generator according to claim 7;
wherein the pressurizing means of the micro pump is arranged independently of said fuel chamber, and one pressurizing means is attached to one, two or more fuel chambers, and gives pressure.

10. A fuel cell power generator according to claim 6;
wherein the fuel supply section has:
an ejecting unit having a nozzle for ejecting the fuel exposed to a fuel ejection space at one end thereof, and also having a chamber in which the other end of the nozzle for the fuel ejection and one end of a fuel supply pipe are communicated; and
a pressurizing pump which has a discharge section connected to the other end of said fuel supply pipe, and also has an introducing section communicated with said raw fuel storing section, and pressurizes the fuel which is stored in the raw fuel storing section and introduced from the introducing section to discharge it from the discharge section, and ejecting this fuel to the fuel ejecting space through the nozzle for the fuel ejection in the ejecting unit;
wherein said ejecting unit has plural nozzles for the fuel ejection, and means for changing the volume of the chamber in at least one of the wall face of said chamber, and is constructed such that the fuel ejected from said nozzles for the fuel ejection is formed as fine particles.

11. A fuel cell power generator according to claim 10;
wherein the means for changing the volume of the chamber is constructed by a piezoelectric/electrostrictive element arranged on the wall face of at least one portion of said chamber.

12. A fuel cell power generator according to claim 10;
wherein the means for changing the volume of the chamber is constructed by pressurizing means arranged independently of said chamber, and one pressurizing means is attached to one, two or more chambers, and gives pressure.

13. A fuel cell power generator according to claim 10;
wherein the fuel supply section has a solenoid valve for opening and closing a fuel passage in one portion of said fuel supply pipe.
